(19) Europäisches Patentamt
European Patent Office
Office européen des brevets

(11) **EP 4 428 943 B1**

(12) **EUROPEAN PATENT SPECIFICATION**

(45) Date of publication and mention
of the grant of the patent:
**08.04.2026 Bulletin 2026/15**

(21) Application number: **22911880.7**

(22) Date of filing: **20.12.2022**

(51) International Patent Classification (IPC):
*H01M 4/133* (2010.01)    *H01M 10/0525* (2010.01)
*H01M 4/02* (2006.01)    *H01M 4/1393* (2010.01)
*H01M 4/36* (2006.01)

(52) Cooperative Patent Classification (CPC):
**H01M 4/02; H01M 4/133; H01M 4/1393;**
**H01M 4/364; H01M 4/366; H01M 10/0525;**
H01M 2004/021; H01M 2004/027; H01M 2004/028;
Y02E 60/10

(86) International application number:
**PCT/KR2022/020878**

(87) International publication number:
**WO 2023/121247 (29.06.2023 Gazette 2023/26)**

(54) **NEGATIVE ELECTRODE AND SECONDARY BATTERY INCLUDING THE SAME**

NEGATIVELEKTRODE UND SEKUNDÄRBATTERIE DAMIT

ÉLECTRODE NÉGATIVE ET BATTERIE SECONDAIRE LA COMPRENANT

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **21.12.2021 KR 20210184261**

(43) Date of publication of application:
**11.09.2024 Bulletin 2024/37**

(73) Proprietor: **LG Energy Solution, Ltd.**
**Seoul 07335 (KR)**

(72) Inventors:
• **PIAO, Lilin**
**Daejeon 34122 (KR)**
• **LEE, Yong Ju**
**Daejeon 34122 (KR)**
• **WOO, Sang Wook**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
EP-A2- 4 273 960      WO-A1-2021/217587
WO-A2-2018/062836    KR-A- 20180 124 659
KR-A- 20200 073 801    KR-A- 20200 088 237
KR-A- 20200 088 237    US-A1- 2021 391 570

EP 4 428 943 B1

**Description**

**TECHNICAL FIELD**

Cross-reference to Related Applications

This application claims priority from Korean Patent Application No. 10-2021-0184261, filed on December 21, 2021.

Technical Field

The present invention relates to a negative electrode and a secondary battery including the same.

**BACKGROUND ART**

An eco-friendly alternative energy source is becoming an indispensable factor for future life as the price of energy sources increases due to the depletion of fossil fuels and interest in environmental pollution grows.

Particularly, the demand for secondary batteries as the eco-friendly alternative energy source has been significantly increased as technology development and demand with respect to mobile devices have increased.

In the secondary battery, lithium metal has been conventionally used as a negative electrode, but the use of a carbon-based active material, which may reversibly intercalate and deintercalate lithium ions and maintains structural and electrical properties, has emerged as a battery short circuit due to formation of dendrites and risk of accompanying explosion become a problem.

Various types of carbon-based materials, such as artificial graphite, natural graphite, and hard carbon, have been used as the carbon-based active material, and, among them, a graphite-based active material, which may guarantee life characteristics of the lithium secondary battery due to excellent reversibility, has been most widely used. Since the graphite-based active material has a low discharge voltage relative to lithium of -0.2 V, a battery using the graphite-based active material may exhibit a high discharge voltage of 3.6 V, and thus, it provides many advantages in terms of energy density of the lithium battery.

Among the graphite-based active materials, since natural graphite particularly exhibits higher output and capacity than other carbon-based active materials, such as artificial graphite, and has excellent adhesion, it is advantageous in that an amount of a binder or the like used may be reduced and a high-capacity and high-density negative electrode may be achieved. However, the natural graphite has a problem in that durability of the negative electrode is reduced due to a high degree of electrolyte solution side reaction, and has a problem in that cycle expansion characteristics are unfavorable due to a high degree of orientation.

Thus, there is a need to develop a negative electrode active material capable of preventing the cycle expansion problem while promoting the achievement of the high output and capacity of the natural graphite.

Japanese Patent No. 4403327 discloses graphite powder for a negative electrode of a lithium ion secondary battery, but does not provide an alternative to the above-described problems.

WO 2018/062836 A2 describes a multi-layer anode comprising: an anode current collector for transporting electrons between an outside conducting wire and an anode active material; a first anode mixture layer formed on one surface or both surfaces of the current collector and comprising natural graphite as an anode active material; and a second anode mixture layer formed on the first anode mixture layer and comprising artificial graphite as an anode active material.

KR 10-2020-0088237 A concerns a negative electrode including a current collector and a negative active material layer, wherein the negative active material layer includes negative active material particles, the negative active material particles include natural graphite and a carbon coating layer disposed on the natural graphite.

[PRIOR ART DOCUMENT]

[PATENT DOCUMENT]

Japanese Patent No. 4403327
WO 2018/062836 A2
KR 10-2020-0088237 A

**DISCLOSURE OF THE INVENTION**

## TECHNICAL PROBLEM

An aspect of the present invention provides a negative electrode which may effectively prevent a cycle expansion problem while having high energy density, excellent rapid charging performance, and improved negative electrode adhesion.

Another aspect of the present invention provides a secondary battery including the above-described negative electrode.

## TECHNICAL SOLUTION

According to an aspect of the present invention, there is provided a negative electrode including a negative electrode current collector; a lower negative electrode active material layer disposed on the negative electrode current collector; and an upper negative electrode active material layer disposed on the lower negative electrode active material layer, wherein the lower negative electrode active material layer includes a first negative electrode active material including natural graphite particles and a second negative electrode active material including artificial graphite particles in the form of a primary particle, and the upper negative electrode active material layer includes a third negative electrode active material including artificial graphite particles in the form of a secondary particle in which two or more primary particles are assembled, wherein a pore volume of the first negative electrode active material, which is measured by mercury porosimetry, is 0.06 mL/g or less, and wherein a ratio of the average particle diameter ($D_{50}$) of the first negative electrode active material to the average particle diameter ($D_{50}$) of the second negative electrode active material is in a range of 1 to 8.

According to another aspect of the present invention, there is provided a secondary battery including the above-described negative electrode; a positive electrode facing the negative electrode; a separator disposed between the negative electrode and the positive electrode; and an electrolyte.

## ADVANTAGEOUS EFFECTS

A negative electrode of the present invention is characterized in that it includes a negative electrode active material layer with a double-layer structure, wherein a lower negative electrode active material layer includes a first negative electrode active material including natural graphite particles and a second negative electrode active material including artificial graphite particles in the form of a primary particle, and an upper negative electrode active material layer includes a third negative electrode active material including artificial graphite particles in the form of a secondary particle, wherein a pore volume of the first negative electrode active material, which is measured by mercury porosimetry, satisfies a specific range. Since the first negative electrode active material and the second negative electrode active material, which are included in the lower negative electrode active material layer, may improve adhesion to a negative electrode current collector and capacity of the negative electrode and may reduce a degree of cycle expansion and the third negative electrode active material included in the upper negative electrode active material layer may improve rapid charging performance, the negative electrode of the present invention may have the reduced degree of cycle expansion while having high energy density, excellent rapid charging performance, and improved negative electrode adhesion.

## BRIEF DESCRIPTION OF THE DRAWINGS

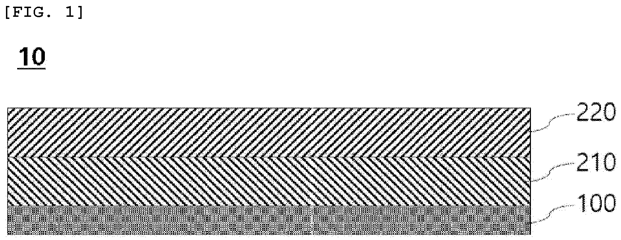

FIG. 1 is a schematic side view for explaining a negative electrode according to the present invention.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

$D_{50}$ in the present specification may be defined as a particle diameter at a cumulative volume of 50% in a particle size distribution curve. The $D_{50}$, for example, may be measured by using a laser diffraction method. The laser diffraction method may generally measure a particle diameter ranging from submicrons to a few mm and may obtain highly repeatable and high-resolution results.

A BET specific surface area in the present specification, for example, may be measured by a BET (Brunauer-Emmett-Teller) measurement method using BELSORP (BET instrument) by BEL JAPAN, INC. using an adsorption gas such as nitrogen.

Hereinafter, the present invention will be described in detail with reference to the drawing. Specifically, FIG. 1 is a schematic side view for explaining a negative electrode according to the present invention.

**<Negative Electrode>**

The present invention relates to a negative electrode, specifically, a negative electrode for a lithium secondary battery.

Referring to Figure 1, a negative electrode 10 of the present invention is characterized in that it includes a negative electrode current collector 100; a lower negative electrode active material layer 210 disposed on the negative electrode current collector 100; and an upper negative electrode active material layer 220 disposed on the lower negative electrode active material layer 210, wherein the lower negative electrode active material layer 210 includes a first negative electrode active material including natural graphite particles and a second negative electrode active material including artificial graphite particles in the form of a primary particle, and the upper negative electrode active material layer 220 includes a third negative electrode active material including artificial graphite particles in the form of a secondary particle in which two or more primary particles are assembled, wherein a pore volume of the first negative electrode active material, which is measured by mercury porosimetry, is 0.06 mL/g or less.

According to the negative electrode of the present invention, since the first negative electrode active material and the second negative electrode active material, which are included in the lower negative electrode active material layer, may improve adhesion to the negative electrode current collector and capacity of the negative electrode and may reduce a degree of cycle expansion and the third negative electrode active material included in the upper negative electrode active material layer may improve rapid charging performance, the negative electrode of the present invention may have the reduced degree of cycle expansion while having high energy density, excellent rapid charging performance, and improved negative electrode adhesion.

Negative Electrode current collector 100

A negative electrode current collector commonly used in the art may be used as the negative electrode current collector 100 without limitation, and, for example, the negative electrode current collector 100 is not particularly limited as long as it has high conductivity without causing adverse chemical changes in the lithium secondary battery. For example, the negative electrode current collector 100 may include at least one selected from the group consisting of copper, stainless steel, aluminum, nickel, titanium, fired carbon, and an aluminum-cadmium alloy, preferably, copper.

Microscopic irregularities may be formed on a surface of the negative electrode current collector 100 to improve adhesion of the negative electrode active material, and the negative electrode current collector may be used in various shapes such as that of a film, a sheet, a foil, a net, a porous body, a foam body, a non-woven fabric body, and the like.

The negative electrode current collector 100 may generally have a thickness of 3 $\mu$m to 500 $\mu$m.

Lower Negative Electrode Active Material Layer 210

The lower negative electrode active material layer 210 is disposed on the negative electrode current collector 100.

The lower negative electrode active material layer 210 may be disposed on at least one surface, specifically, one surface or both surfaces of the negative electrode current collector 100.

The lower negative electrode active material layer 210 includes a first negative electrode active material and a second negative electrode active material.

The first negative electrode active material includes natural graphite particles. The first negative electrode active material may improve adhesion between the lower negative electrode active material layer and the negative electrode current collector and may contribute to an improvement in capacity of the negative electrode by including the natural graphite particles.

A pore volume of the first negative electrode active material, which is measured by mercury porosimetry, is 0.06 mL/g or less.

The mercury porosimetry (Hg porosimeter) is a measurement method capable of measuring a size, porosity, or pore volume of pores present on a surface of a sample by injecting mercury into the sample. Unlike a BET nitrogen adsorption method, since the mercury porosimetry injects mercury, not gas, into the sample, it may measure a volume of large pores, specifically, pores having a size of about 5 nm to 1,000 nm in the negative electrode active material. In contrast, with respect to the BET nitrogen adsorption method, since nitrogen gas is adsorbed on a sample to measure a volume of pores, existence, specific surface area, or pore volume of small-sized pores, specifically, pores having a size of a few nm to 100 nm, may be measured, but there is a limitation in measuring pores having a size of 100 nm or more. In this respect, it may be considered that measurement ranges of the pores by the mercury porosimetry and the BET nitrogen adsorption method are different from each other.

With respect to the first negative electrode active material, a ratio, amount, or volume of pores having a large pore size, for example, a pore size of 100 nm or more, in the particle is reduced by adjusting the pore volume measured by mercury porosimetry to the above-described level. Since the lower negative electrode active material layer includes the first negative electrode active material, electrode adhesion and energy density of the negative electrode may be improved and cycle expansion may be reduced at the same time. Also, since the first negative electrode active material is included in the lower negative electrode active material layer together with the second negative electrode active material to be described later, effects of improving the negative electrode adhesion of the negative electrode and reducing the cycle expansion may be further improved.

If the pore volume of the first negative electrode active material, which is measured by mercury porosimetry, is greater than 0.06 mL/g, since the cycle expansion may not be sufficiently reduced, occurrence of negative electrode swelling may be intensified.

Specifically, the pore volume of the first negative electrode active material, which is measured by mercury porosimetry, may be in a range of 0.001 mL/g to 0.06 mL/g, and may more specifically be in a range of 0.010 mL/g to 0.045 mL/g, and, when the pore volume is within the above range, effects of improving the energy density of the above-described negative electrode, the rapid charging performance, and the negative electrode adhesion and reducing the cycle expansion may be further improved.

A BET specific surface area of the first negative electrode active material may be in a range of 0.6 $m^2/g$ to 2.5 $m^2/g$, specifically, 1.5 $m^2/g$ to 2.2 $m^2/g$. In a case in which the negative electrode active material has a specific surface area of the above-described level, a sufficient contact area with an electrolyte may be secured and output characteristics may be improved, and, simultaneously, the above-described effects of reducing the cycle expansion and preventing an electrolyte side reaction may be further improved.

The BET specific surface area may be measured by a Brunauer-Emmett-Teller (BET) method. For example, the BET specific surface area may be measured by a 6-point BET method according to a nitrogen gas adsorption-flow method using a porosimetry analyzer (Bell Japan Inc, Belsorp-II mini).

An average particle diameter ($D_{50}$) of the first negative electrode active material may be in a range of 8 $\mu$m to 25 $\mu$m, particularly 12 $\mu$m to 20 $\mu$m, and more particularly 15 $\mu$m to 20 $\mu$m. In a case in which the average particle diameter ($D_{50}$) of the negative electrode active material is adjusted to the above-described range, it is desirable in terms of preventing swelling because the BET specific surface area is adjusted to a desired level and pores between the particles are reduced, and it is desirable because a problem of intensifying a degree of volume expansion according to charge and discharge due to an excessive increase in the average particle diameter of the natural graphite particles and a problem of degradation of the rapid charging performance due to an increase in diffusion distance of lithium are prevented.

The first negative electrode active material may have a spherical shape. In a case in which the first negative electrode active material has a spherical shape, since a pore structure is smoothly maintained when the first negative electrode active material is included in the negative electrode, a lithium ion diffusion path may be secured and output characteristics of the negative electrode may be improved. Also, in the case that the first negative electrode active material has a spherical shape, since adhesion in the negative electrode may be improved, an amount of a binder used may be relatively reduced, and thus, it may be advantageous in output characteristics and reduction of resistance. In the present specification, the expression "spherical shape" is a concept that includes not only a perfect spherical shape, but also a substantially spherical shape even if it is somewhat distorted.

Tap density of the first negative electrode active material may be in a range of 1.0 g/cc to 1.3 g/cc, particularly 1.05 g/cc to 1.30 g/cc, and more particularly 1.11 g/cc to 1.20 g/cc. When the tap density is within the above range, it is desirable in terms of reducing the degree of cycle expansion of the negative electrode including the negative electrode active material while improving sphericity of the negative electrode active material.

The tap density, for example, may be obtained by filling 40 g of the first negative electrode active material in a cylindrical container having a diameter of 30 mm and a capacity of 100 mL and then calculating apparent density by measuring a final volume which is obtained by vibrating the cylindrical container up and down 1,000 times at an amplitude of 10 mm.

The first negative electrode active material may further include an amorphous carbon coating layer that is disposed on at least a portion of a surface of the natural graphite particle.

Since the amorphous carbon coating layer contributes to reduce the specific surface area of the first negative electrode active material and improve cell performance and further facilitates mobility of lithium ions, it may contribute to reduce the resistance and improve the rapid charging performance. More specifically, the first negative electrode active material may be composed of the natural graphite particles and the amorphous carbon coating layer.

The amorphous carbon coating layer may be included in an amount of 1 wt% to 10 wt%, specifically, 2 wt% to 5 wt% in the second negative electrode active material.

A method of preparing the first negative electrode active material, for example, is not particularly limited as long as the pore volume by mercury porosimetry may be adjusted to the above-described level. More specifically, the first negative electrode active material may be prepared by a method including the following steps.

(a) iso-pressing a natural graphite raw material;
(b) mixing the iso-pressed natural graphite raw material and a binder material to prepare a mixture;
(c) carbonizing the mixture by performing a heat treatment; and
(d) disintegrating the carbonized mixture;

According to the above preparation method, the first negative electrode active material may be prepared by iso-pressing the natural graphite raw material, mixing the iso-pressed natural graphite raw material with the binder material, carbonizing the mixture by performing a heat treatment, and then performing a disintegration process.

The natural graphite raw material may be spherical natural graphite particles.

The iso-pressing may be cold iso-pressing or hot iso-pressing.

The iso-pressing may be performed at a pressure of 20 MPa to 100 MPa, specifically, a pressure of 45 MPa to 95 MPa. Since the iso-pressing is performed within the above pressure range, pores in the natural graphite raw material may be reduced and an increase in defects of the natural graphite raw material due to pressurization with excessive pressure may be prevented.

The iso-pressing may be performed for 0.1 minutes to 20 minutes, specifically, 0.5 minutes to 3 minutes, and it is desirable in terms of properly adjusting and maintaining desired physical properties of the first negative electrode active material when the iso-pressing is performed within the above range.

The binder material may include at least one selected from polymer resin and pitch. Specifically, the polymer resin may include at least one selected from the group consisting of sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, vinyl chloride resin, and polyvinyl chloride. The pitch may include at least one selected from the group consisting of coal-based pitch, petroleum-based pitch, and mesophase pitch.

The natural graphite raw material and the binder material may be mixed in a weight ratio of 100:4 to 100:14, specifically, 100:5 to 100:10.

The heat treatment of the mixture may be performed at 1,000°C to 1,500°C, specifically, 1,150°C to 1,300°C, and, when the heat treatment temperature is within the above range, carbonization of the binder material may be preferably performed. The heat treatment may be performed for 20 hours to 48 hours.

After the disintegration of the carbonized mixture, a sieving process may be further performed. The disintegration and the sieving, for example, may be performed to a level that satisfies the above-described average particle diameter ($D_{50}$) range of the first negative electrode active material.

The lower negative electrode active material layer includes a second negative electrode active material. The second negative electrode active material includes artificial graphite particles in the form of a primary particle. Specifically, the second negative electrode active material may be composed of only artificial graphite particles in the form of a primary particle.

Since the lower negative electrode active material layer includes the second negative electrode active material together with the above-described first negative electrode active material, rapid charging characteristics and low degree of cycle expansion of the negative electrode may be achieved. Particularly, since the second negative electrode active material includes the artificial graphite particles in the form of a primary particle rather than artificial graphite particles in the form of a secondary particle and the artificial graphite particles in the form of a primary particle have higher tab density than the artificial graphite particles in the form of a secondary particle, packing properties of the lower negative electrode active material layer may be improved and a thickness of the electrode may be reduced, and thus, the energy density may be improved. Also, since the second negative electrode active material includes the artificial graphite particles in the form of a primary particle having excellent cycle expansion performance, the cycle expansion may be reduced to an excellent level when the second negative electrode active material is mixed with the first negative electrode active material.

In this case, the artificial graphite particles in the form of a primary particle means artificial graphite particles in the form of a single particle, and are used as a term distinct from the "artificial graphite particles in the form of a secondary particle" which are aggregates in which the two or more artificial graphite particles in the form of a primary particle are aggregated by an intentional assembly or bonding process.

An average particle diameter ($D_{50}$) of the second negative electrode active material may be in a range of 4 μm to 13 μm, specifically, 7 μm to 10 μm. When the average particle diameter is within the above range, since a specific surface area of the second negative electrode active material may be reduced to a desirable level, it may not only contribute to improve the capacity of the negative electrode, but the second negative electrode active material may also densely fill empty spaces formed between the first negative electrode active materials to be described later, and thus, rolling performance may be improved.

A BET specific surface area of the second negative electrode active material may be in a range of 0.1 $m^2$/g to 3.0 $m^2$/g, specifically, 0.8 $m^2$/g to 1.5 $m^2$/g, and, when the BET specific surface area is within the above range, it is desirable in terms of suppressing the side reaction and reducing the resistance. The BET specific surface area may be measured using a BEL Sorption instrument (BEL Japan, Inc.).

The second negative electrode active material may have a spherical shape. In a case in which the second negative electrode active material has a spherical shape, since a pore structure is smoothly maintained when the second negative electrode active material is included in the negative electrode, the lithium ion diffusion path may be secured and the output characteristics of the negative electrode may be improved.

Tap density of the second negative electrode active material may be in a range of 1.0 g/cc to 1.3 g/cc, specifically, 1.15 g/cc to 1.30 g/cc. When the tap density is within the above range, it is desirable in terms of reducing the degree of cycle expansion of the negative electrode including the negative electrode active material while improving the sphericity of the negative electrode active material.

A weight ratio of the first negative electrode active material to the second negative electrode active material may be in a range of 50:50 to 90:10. When the weight ratio is within the above range, it is desirable in terms of simultaneously improving the energy density and the cycle expansion characteristics to a desirable level.

A ratio of the average particle diameter ($D_{50}$) of the first negative electrode active material to the average particle diameter ($D_{50}$) of the second negative electrode active material is in a range of 1 to 8, specifically, 1.5 to 3.0, and, when the ratio is within the above range, it is desirable in terms of improving the cycle expansion characteristics while minimizing an electrolyte solution side reaction.

A total weight of the first negative electrode active material and the second negative electrode active material may be in a range of 80 wt% to 99 wt%, preferably, 90 wt% to 98 wt% based on a weight of the lower negative electrode active material layer 210.

Also, the lower negative electrode active material layer 210 may optionally further include at least one additive selected from the group consisting of a binder, a thickener, and a conductive agent together with the first negative electrode active material and the second negative electrode active material.

The binder is a component that assists in the binding between the conductive agent, the active material, and the current collector, wherein the binder may be added into the lower negative electrode active material layer 210 in an amount of 1 wt% to 30 wt%. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a fluorine rubber, and various copolymers thereof.

Any thickener used in a conventional lithium secondary battery may be used as the thickener, and an example thereof is carboxymethyl cellulose (CMC).

The conductive agent is a component for further improving conductivity of a negative electrode material, wherein the conductive agent may be added into the lower negative electrode active material layer 210 in an amount of 1 wt% to 20 wt%. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

Upper Negative Electrode Active Material Layer 220

The upper negative electrode active material layer 220 is disposed on the lower negative electrode active material layer 210. Specifically, the upper negative electrode active material layer 220 may be formed on one surface of the lower negative electrode active material layer 210 which does not face the negative electrode current collector 100. If, in a case in which the lower negative electrode active material layer is formed on both surfaces of the negative electrode current collector, the upper negative electrode active material layers may be respectively disposed on the lower negative electrode active material layers respectively formed on the both surfaces of the negative electrode current collector.

The upper negative electrode active material layer 220 includes a third negative electrode active material. The third negative electrode active material includes artificial graphite particles in the form of a secondary particle in which two or more primary particles are assembled. The artificial graphite particles in the form of a secondary particle include pores formed between the primary particles, and, accordingly, lithium ions may be smoothly diffused.

Since the upper negative electrode active material layer is disposed on an upper portion of the negative electrode and includes the third negative electrode active material including artificial graphite particles in the form of a secondary particle, it may facilitate the diffusion of the lithium ions, and, accordingly, the rapid charging performance of the negative electrode may be further improved.

The artificial graphite particle in the form of a secondary particle may be an assembly of two or more primary artificial graphite particles having an average particle diameter ($D_{50}$) of 7 $\mu$m to 13 $\mu$m. In a case in which the average particle diameter of the primary artificial graphite particles included in the uncoated-artificial graphite particle is within the above range, degradation of the rapid charging performance due to the excessively large average particle diameter ($D_{50}$) of the primary artificial graphite particles may be prevented while the capacity is adjusted to a desirable level.

The third negative electrode active material may further include an amorphous carbon coating layer disposed on the artificial graphite particles in the form of a secondary particle. The amorphous carbon coating layer may be included in an amount of 1 wt% to 10 wt%, specifically, 2 wt% to 5 wt% in the third negative electrode active material.

The amorphous carbon coating layer may be formed by performing a heat treatment, after providing a carbon precursor to the artificial graphite particles in the form of a secondary particle. The carbon precursor may be a polymer resin such as sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, vinyl chloride resin, and polyvinyl chloride; and pitch such as coal-based pitch, petroleum-based pitch, and mesophase pitch, but is not limited thereto. Temperature of the heat treatment may be in a range of 1,000°C to 1,800°C.

An average particle diameter ($D_{50}$) of the third negative electrode active material may be in a range of 15 $\mu$m to 25 $\mu$m, specifically, 17 $\mu$m to 22 $\mu$m. When the average particle diameter is within the above range, since the degradation of the rapid charging performance due to the excessive particle diameter is prevented and the specific surface area of the active material is adjusted to a desired level, it is desirable to improve high-temperature performance.

A BET specific surface area of the third negative electrode active material may be in a range of 0.1 m$^2$/g to 3.0 m$^2$/g, specifically, 0.6 m$^2$/g to 1.0 m$^2$/g, and, when the BET specific surface area is within the above range, it is desirable in terms of minimizing the electrolyte side reaction.

Tap density of the third negative electrode active material may be in a range of 1.0 g/cc or less or 0.85 g/cc to 0.99 g/cc.

A weight of the third negative electrode active material may be in a range of 80 wt% to 99 wt%, preferably, 90 wt% to 98 wt% based on a weight of the upper negative electrode active material layer 220.

Also, the upper negative electrode active material layer 220 may optionally further include at least one additive selected from the group consisting of a binder, a thickener, and a conductive agent together with the third negative electrode active material.

The binder is a component that assists in the binding between the conductive agent, the active material, and the current collector, wherein the binder may be added into the upper negative electrode active material layer 220 in an amount of 1 wt% to 30 wt%. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a fluorine rubber, and various copolymers thereof.

Any thickener used in a conventional lithium secondary battery may be used as the thickener, and an example thereof is carboxymethyl cellulose (CMC).

The conductive agent is a component for further improving the conductivity of the negative electrode material, wherein the conductive agent may be added into the upper negative electrode active material layer 220 in an amount of 1 wt% to 20 wt%. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

A sum of a thickness of the lower negative electrode active material layer 210 and a thickness of the upper negative electrode active material layer 220 may be in a range of 30 $\mu$m to 200 $\mu$m, particularly 100 $\mu$m to 150 $\mu$m, and more particularly 110 $\mu$m to 130 $\mu$m.

A ratio of the thickness of the lower negative electrode active material layer to the thickness of the upper negative electrode active material layer may be in a range of 1:0.5 to 1:2, specifically, 1:0.8 to 1:1.3. When the ratio is within the above range, it is desirable in terms of the fact that overall charge and discharge performance of the negative electrode, adhesion, and energy density may be simultaneously improved.

A sum of a loading amount of the lower negative electrode active material layer and a loading amount of the upper negative electrode active material layer may be in a range of 3 mAh/cm$^2$ to 4 mAh/cm$^2$, specifically, 3.4 mAh/cm$^2$ to 3.8 mAh/cm$^2$.

A ratio of the loading amount of the lower negative electrode active material layer to the loading amount of the upper negative electrode active material layer may be in a range of 1:0.5 to 1:2, specifically, 1:0.8 to 1:1.3. When the ratio is within the above range, it is desirable in terms of the fact that the overall charge and discharge performance of the negative electrode, the adhesion, and the energy density may be simultaneously improved.

Preparation of the negative electrode is not particularly limited as long as the lower negative electrode active material layer and the upper negative electrode active material layer, which have the above-described characteristics, may be achieved. For example, after the first negative electrode active material, the second negative electrode active material, and at least one additive selected from the binder, the conductive agent, and the thickener are added to a solvent to prepare a slurry for the lower negative electrode active material layer and the third negative electrode active material and at least one additive selected from the binder, the conductive agent, and the thickener are added to a solvent to prepare a slurry for the upper negative electrode active material layer, the negative electrode according to the present invention may be prepared by coating these slurries on the negative electrode current collector. More specifically, the negative electrode according to the present invention may be prepared by coating the negative electrode current collector with the above-prepared slurry for the lower negative electrode active material layer, rolling, and drying to form the lower negative electrode active material layer and by coating the above-prepared slurry for the upper negative electrode active material layer on the lower negative electrode active material layer, rolling, and drying to form the upper negative electrode active material layer. The negative electrode according to the present invention may also be prepared by coating the negative electrode current collector with the slurry for the lower negative electrode active material layer and substantially simultaneously coating the slurry for the upper negative electrode active material layer on the slurry for the lower negative electrode active material layer being coated, rolling, and drying.

### <Secondary Battery>

Also, the present invention provides a secondary battery including the above-described negative electrode. Specifically, the secondary battery may be a lithium secondary battery.

Specifically, the secondary battery includes the above-described negative electrode; a positive electrode facing the negative electrode; a separator disposed between the negative electrode and the positive electrode; and an electrolyte.

The positive electrode may include a positive electrode current collector, and a positive electrode active material layer formed on the positive electrode current collector.

The positive electrode current collector is not particularly limited as long as it has high conductivity without causing adverse chemical changes in the battery, and, for example, stainless steel, aluminum, nickel, titanium, fired carbon, or aluminum or stainless steel that is surface-treated with one of carbon, nickel, titanium, or silver may be used.

The positive electrode current collector may generally have a thickness of 3 $\mu$m to 500 $\mu$m.

The positive electrode active material layer is formed on the positive electrode current collector, and includes a positive electrode active material.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-nickel-cobalt-based oxide (e.g., $LiNi_{1-Y1}Co_{Y1}O_2$ (where $0<Y1<1$), etc.), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$), etc.), lithium-nickel-manganese-cobalt-based oxide (e.g., $Li(Ni_pCo_qMn_{r1})O_2$ (where $0<p<1$, $0<q<1$, $0<r1<1$, and $p+q+r1=1$) or $Li(Ni_{p1}Co_{q1}Mn_{r2})O_4$ (where $0<p1<2$, $0<q1<2$, $0<r2<2$, and $p1+q1+r2=2$), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein $0<p2<1$, $0<q2<1$, $0<r3<1$, $0<S2<1$, and $p2+q2+r3+S2=1$), etc.), and any one thereof or a m ixture of two or more thereof may be included. Among these materials, in terms of the improvement of capacity characteristics and stability of the battery, the lithium composite metal oxide may include $LiCoO_2$, $LiMnO_2$, $LiNiO_2$, lithium nickel manganese cobalt oxide (e.g., $Li(Ni_{0.6}Mn_{0.2}Co_{0.2})O_2$, $Li(Ni_{0.5}Mn_{0.3}Co_{0.2})O_2$, or $Li(Ni_{0.8}Mn_{0.1}Co_{0.1}O_2)$), or lithium nickel cobalt aluminum oxide (e.g., $LiNi_{0.8}Co_{0.15}Al_{0.05}O_2$, etc.).

The positive electrode active material may be included in an amount of 80 wt% to 99 wt% based on a total weight of the positive electrode active material layer.

The positive electrode active material layer may optionally further include at least one additive selected from the group consisting of a binder and a conductive agent in addition to the above-described positive electrode active material.

The binder is a component that assists in the binding between the active material and the conductive agent and in the binding with the current collector, wherein the binder is commonly added in an amount of 1 wt% to 30 wt% based on the total weight of the positive electrode active material layer. Examples of the binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, a fluorine rubber, and various copolymers.

Any conductive agent may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

The conductive agent may be included in an amount of 1 wt% to 30 wt% based on the total weight of the positive electrode active material layer.

The positive electrode active material layer may be prepared by adding the positive electrode active material and optionally an additive including the binder and/or the conductive agent to a solvent to prepare a positive electrode slurry, followed by coating the positive electrode current collector with the positive electrode slurry, rolling, and drying the coated positive electrode current collector.

The solvent may include an organic solvent, such as NMP (N-methyl-2-pyrrolidone), and may be used in an amount such that desirable viscosity is obtained when the positive electrode active material as well as optionally the binder and the conductive agent are included. For example, the solvent may be included in an amount such that a concentration of a solid content including the positive electrode active material as well as optionally the binder and the conductive agent is in a range of 50 wt% to 95 wt%, preferably, 70 wt% to 90 wt%.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

As described above, the lithium secondary battery is suitable for portable devices, such as mobile phones, notebook computers, and digital cameras, and electric cars such as hybrid electric vehicles (HEVs) and particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Examples and Comparative Examples**

**Example 1: Preparation of Negative Electrode**

<u><Preparation of First Negative Electrode Active Material, Second Negative Electrode Active Material, and Third Negative Electrode Active Material></u>

1. Preparation of First Negative Electrode Active Material

As a natural graphite raw material, spherical natural graphite particles (average particle diameter ($D_{50}$): 17 $\mu$m) were prepared, and the spherical natural graphite particles were subjected to cold iso-pressing at a pressure of 90 MPa for 1 minute.

The cold iso-pressed spherical natural graphite particles and pitch, as a binder material, were mixed in a weight ratio of 100:6, and the mixture was carbonized by performing a heat treatment at 1,250°C for 24 hours. Thereafter, the carbonized mixture was disintegrated and sieved to prepare a first negative electrode active material having an amorphous carbon coating layer formed on the natural graphite particles.

The first negative electrode active material had an average particle diameter ($D_{50}$) of 17 $\mu$m, a BET specific surface area of 1.8 $m^2$/g, and a tap density of 1.12 g/cc.

The amorphous carbon coating layer was formed in an amount of 3 wt% in the first negative electrode active material.

Also, a pore volume of the first negative electrode active material, which was measured by mercury porosimetry, was 0.042 mL/g.

2. Preparation of Second Negative Electrode Active Material

Spherical artificial graphite particles in the form of a primary particle, which had an average particle diameter ($D_{50}$) of 9 $\mu$m, a BET specific surface area of 1.27 $m^2$/g, and a tap density of 1.23 g/cc, were used as a second negative electrode active material.

3. Preparation of Third Negative Electrode Active Material

Artificial graphite particles (average particle diameter ($D_{50}$): 18 $\mu$m) in the form of a secondary particle, in which a plurality of primary artificial graphite particles (average particle diameter ($D_{50}$): about 11 $\mu$m) were aggregated, were prepared.

Specifically, the artificial graphite particles were prepared by grinding a coke raw material into coke having an average particle diameter ($D_{50}$) of about 11 $\mu$m, then mixing the ground coke with pitch to prepare an intermediate granulated in the form of a secondary particle, graphitizing and preparing secondary particles by performing a heat treatment in which the temperature was gradually increased to 3,000°C, was maintained at 3,000°C for 60 hours, and was gradually decreased to room temperature, and adjusting an average particle diameter ($D_{50}$) of the secondary particles to 18 $\mu$m. In this case, total heat treatment time of the intermediate was 2 weeks.

After mixing the artificial graphite particles with pitch, a heat treatment was performed at 1,200°C for 24 hours to form an amorphous carbon coating layer on the artificial graphite particles, and these artificial graphite particles were used as a third negative electrode active material.

The amorphous carbon coating layer was included in an amount of 3.5 wt% in the third negative electrode active material.

The third negative electrode active material had an average particle diameter ($D_{50}$) of 18 $\mu$m, a BET specific surface area of 0.75 m$^2$/g, and a tap density of 0.92 g/cc.

<u>\<Preparation of Negative Electrode\></u>

1. Preparation of Slurry for Lower Negative Electrode Active Material Layer

A mixture in which the first negative electrode active material and the second negative electrode active material were mixed in a weight ratio of 60:40; carbon black as a conductive agent; a styrene-butadiene rubber (SBR) as a binder; and carboxymethylcellulose (CMC) as a thickener, were mixed in a weight ratio of 96.1:1.0:1.7:1.2, and water was added to prepare a slurry for a lower negative electrode active material layer.

2. Preparation of Slurry for Upper Negative Electrode Active Material Layer

The third negative electrode active material; carbon black as a conductive agent; a styrene-butadiene rubber (SBR) as a binder; and carboxymethylcellulose (CMC) as a thickener, were mixed in a weight ratio of 95.3:1.0:2.5:1.2, and water was added to prepare a slurry for an upper negative electrode active material layer.

3. Formation of Lower Negative Electrode Active Material Layer and Upper Negative Electrode Active Material Layer

While coating a copper foil (thickness: 15 $\mu$m), as a negative electrode current collector, with the above-prepared slurry for a lower negative electrode active material layer, the above-prepared slurry for an upper negative electrode active material layer was substantially simultaneously coated on the coated slurry for a lower negative electrode active material layer, roll pressed, and dried in a vacuum oven at 130°C for 10 hours to prepare a negative electrode in which the negative electrode current collector, the lower negative electrode active material layer, and the upper negative electrode active material layer were sequentially stacked.

A loading amount of the lower negative electrode active material layer was 1.8 mAh/cm$^2$, a loading amount of the upper negative electrode active material layer was 1.8 mAh/cm$^2$, and a sum of the loading amounts of the lower negative electrode active material layer and the upper negative electrode active material layer was 3.6 mAh/cm$^2$.

**Example 2: Preparation of Negative Electrode**

<u>\<Preparation of First Negative Electrode Active Material, Second Negative Electrode Active Material, and Third Negative Electrode Active Material\></u>

1. Preparation of First Negative Electrode Active Material

A first negative electrode active material was prepared in the same manner as the preparation method of the first negative electrode active material of Example 1 except that spherical natural graphite particles having an average particle diameter ($D_{50}$) of 18 $\mu$m were used as a natural graphite raw material.

The first negative electrode active material had an average particle diameter ($D_{50}$) of 18 $\mu$m, a BET specific surface area of 1.8 m$^2$/g, a tap density of 1.13 g/cc, and a pore volume measured by mercury porosimetry of 0.041 mL/g.

2. Preparation of Second Negative Electrode Active Material

Spherical artificial graphite particles in the form of a primary particle, which had an average particle diameter ($D_{50}$) of 8 $\mu$m, a BET specific surface area of 1.30 m$^2$/g, and a tap density of 1.25 g/cc, were used as a second negative electrode active material.

3. Preparation of Third Negative Electrode Active Material

Artificial graphite particles (average particle diameter ($D_{50}$): 19 $\mu$m) in the form of a secondary particle, in which a plurality of primary artificial graphite particles (average particle diameter ($D_{50}$) : about 11.5 $\mu$m) were aggregated, were

prepared.

Specifically, the artificial graphite particles were prepared by grinding a coke raw material into coke having an average particle diameter ($D_{50}$) of about 11.5 $\mu$m, then mixing the ground coke with pitch to prepare an intermediate granulated in the form of a secondary particle, graphitizing and preparing secondary particles by performing a heat treatment in which the temperature was gradually increased to 3,000°C, was maintained at 3,000°C for 60 hours, and was gradually decreased to room temperature, and adjusting an average particle diameter ($D_{50}$) of the secondary particles to 19 $\mu$m. In this case, total heat treatment time of the intermediate was 2 weeks.

After mixing the artificial graphite particles with pitch, a heat treatment was performed at 1,200°C for 24 hours to form an amorphous carbon coating layer on the artificial graphite particles, and these artificial graphite particles were used as a third negative electrode active material.

The amorphous carbon coating layer was included in an amount of 3.5 wt% in the third negative electrode active material.

The third negative electrode active material had an average particle diameter ($D_{50}$) of 19 $\mu$m, a BET specific surface area of 0.7 m$^2$/g, and a tap density of 0.90 g/cc.

<u>\<Preparation of Negative Electrode\></u>

A negative electrode was prepared in the same manner as in Example 1 except that the above-prepared first negative electrode active material, second negative electrode active material, and third negative electrode active material were used and the first negative electrode active material and the second negative electrode active material were mixed in a weight ratio of 70:30 during the preparation of the lower negative electrode active material layer.

**Example 3: Preparation of Negative Electrode**

<u>\<Preparation of First Negative Electrode Active Material, Second Negative Electrode Active Material, and Third Negative Electrode Active Material\></u>

1. Preparation of First Negative Electrode Active Material

A first negative electrode active material was prepared in the same manner as the preparation method of the first negative electrode active material of Example 1 except that spherical natural graphite particles having an average particle diameter ($D_{50}$) of 18 $\mu$m were used as a natural graphite raw material.

The first negative electrode active material had an average particle diameter ($D_{50}$) of 18 $\mu$m, a BET specific surface area of 1.8 m$^2$/g, a tap density of 1.14 g/cc, and a pore volume measured by mercury porosimetry of 0.039 mL/g.

2. Preparation of Second Negative Electrode Active Material

The same as the second negative electrode active material used in Example 2 was prepared.

3. Preparation of Third Negative Electrode Active Material

The same as the third negative electrode active material used in Example 1 was prepared.

<u>\<Preparation of Negative Electrode\></u>

A negative electrode was prepared in the same manner as in Example 1 except that the above-prepared first negative electrode active material, second negative electrode active material, and third negative electrode active material were used and the first negative electrode active material and the second negative electrode active material were mixed in a weight ratio of 90:10 during the preparation of the lower negative electrode active material layer.

**Comparative Example 1: Preparation of Negative Electrode**

1. Preparation of Slurry for Lower Negative Electrode Active Material Layer

A negative electrode active material was prepared in the same manner as the preparation method of the first negative electrode active material of Example 1 except that iso-pressing was not performed.

The negative electrode active material had an average particle diameter ($D_{50}$) of 18 $\mu$m, a specific surface area of 2.7 m$^2$/g, a tap density of 1.10 g/cc, and a pore volume measured by mercury porosimetry of 0.080 mL/g.

The negative electrode active material; carbon black as a conductive agent; a styrene-butadiene rubber (SBR) as a binder; and carboxymethylcellulose (CMC) as a thickener, were mixed in a weight ratio of 96.1:1.0:1.7:1.2, and water was added to prepare a slurry for a lower negative electrode active material layer.

2. Preparation of Slurry for Upper Negative Electrode Active Material Layer

The same as the third negative electrode active material used in Example 2 was prepared as a negative electrode active material.
The negative electrode active material; carbon black as a conductive agent; a styrene-butadiene rubber (SBR) as a binder; and carboxymethylcellulose (CMC) as a thickener, were mixed in a weight ratio of 95.3:1.0:2.5:1.2, and water was added to prepare a slurry for an upper negative electrode active material layer.

3. Formation of Lower Negative Electrode Active Material Layer and Upper Negative Electrode Active Material Layer

A negative electrode was prepared in the same manner as in Example 1 except that the above-prepared slurry for a lower negative electrode active material layer and slurry for an upper negative electrode active material layer were used.

**Comparative Example 2: Preparation of Negative Electrode**

1. Preparation of Slurry for Lower Negative Electrode Active Material Layer

The same as the third negative electrode active material prepared in Example 2 was used as a negative electrode active material.
The negative electrode active material; carbon black as a conductive agent; a styrene-butadiene rubber (SBR) as a binder; and carboxymethylcellulose (CMC) as a thickener, were mixed in a weight ratio of 95.3:1.0:2.5:1.2, and water was added to prepare a slurry for a lower negative electrode active material layer.

2. Preparation of Slurry for Upper Negative Electrode Active Material Layer

A negative electrode active material was prepared in the same manner as the preparation method of the first negative electrode active material of Example 1 except that iso-pressing was not performed.
The negative electrode active material had an average particle diameter ($D_{50}$) of 19 $\mu$m, a specific surface area of 2.8 $m^2$/g, a tap density of 1.10 g/cc, and a pore volume measured by mercury porosimetry of 0.090 mL/g.
The negative electrode active material; carbon black as a conductive agent; a styrene-butadiene rubber (SBR) as a binder; and carboxymethylcellulose (CMC) as a thickener, were mixed in a weight ratio of 96.1:1.0:1.7:1.2, and water was added to prepare a slurry for an upper negative electrode active material layer.

3. Formation of Lower Negative Electrode Active Material Layer and Upper Negative Electrode Active Material Layer

A negative electrode was prepared in the same manner as in Example 1 except that the above-prepared slurry for a lower negative electrode active material layer and slurry for an upper negative electrode active material layer were used.

**Comparative Example 3: Preparation of Negative Electrode**

1. Preparation of Slurry for Lower Negative Electrode Active Material Layer

The same as the slurry for a lower negative electrode active material layer of Comparative Example 1 was prepared.

2. Preparation of Slurry for Upper Negative Electrode Active Material Layer

Spherical artificial graphite particles in the form of a primary particle, which had an average particle diameter ($D_{50}$) of 10 $\mu$m, a BET specific surface area of 1.25 $m^2$/g, and a tap density of 1.15 g/cc, were used as a negative electrode active material.
The negative electrode active material; carbon black as a conductive agent; a styrene-butadiene rubber (SBR) as a binder; and carboxymethylcellulose (CMC), as a thickener, were mixed in a weight ratio of 95.3:1.0:2.5:1.2, and water was added to prepare a slurry for an upper negative electrode active material layer.

3. Formation of Lower Negative Electrode Active Material Layer and Upper Negative Electrode Active Material Layer

A negative electrode was prepared in the same manner as in Example 1 except that the above-prepared slurry for a lower negative electrode active material layer and slurry for an upper negative electrode active material layer were used.

**Comparative Example 4: Preparation of Negative Electrode**

1. Preparation of Slurry for Lower Negative Electrode Active Material Layer

Spherical artificial graphite particles in the form of a primary particle, which had an average particle diameter ($D_{50}$) of 10 $\mu$m, a BET specific surface area of 1.25 m$^2$/g, and a tap density of 1.15 g/cc, were used as a negative electrode active material.

The negative electrode active material; carbon black as a conductive agent; a styrene-butadiene rubber (SBR) as a binder; and carboxymethylcellulose (CMC), as a thickener, were mixed in a weight ratio of 95.3:1.0:2.5:1.2, and water was added to prepare a slurry for a lower negative electrode active material layer.

2. Preparation of Slurry for Upper Negative Electrode Active Material Layer

A negative electrode active material was prepared in the same manner as the preparation method of the first negative electrode active material of Example 1 except that iso-pressing was not performed.

The negative electrode active material had an average particle diameter ($D_{50}$) of 19 $\mu$m, a specific surface area of 2.8 m$^2$/g, a tap density of 1.10 g/cc, and a pore volume measured by mercury porosimetry of 0.090 mL/g.

The negative electrode active material; carbon black as a conductive agent; a styrene-butadiene rubber (SBR) as a binder; and carboxymethylcellulose (CMC) as a thickener, were mixed in a weight ratio of 96.1:1.0:1.7:1.2, and water was added to prepare a slurry for an upper negative electrode active material layer.

3. Formation of Lower Negative Electrode Active Material Layer and Upper Negative Electrode Active Material Layer

A negative electrode was prepared in the same manner as in Example 1 except that the above-prepared slurry for a lower negative electrode active material layer and slurry for an upper negative electrode active material layer were used.

**Comparative Example 5: Preparation of Negative Electrode**

<u><Preparation of First Negative Electrode Active Material, Second Negative Electrode Active Material, and Third Negative Electrode Active Material></u>

1. Preparation of First Negative Electrode Active Material

A negative electrode active material was prepared in the same manner as the preparation method of the first negative electrode active material of Example 1 except that iso-pressing was not performed.

The negative electrode active material had an average particle diameter ($D_{50}$) of 18 $\mu$m, a specific surface area of 2.7 m$^2$/g, a tap density of 1.10 g/cc, and a pore volume measured by mercury porosimetry of 0.080 mL/g.

2. Preparation of Second Negative Electrode Active Material

The same as the second negative electrode active material of Example 1 was prepared.

3. Preparation of Third Negative Electrode Active Material

The same as the third negative electrode active material of Example 1 was prepared.

<u><Preparation of Negative Electrode></u>

A negative electrode was prepared in the same manner as in Example 1 except that the above-prepared first negative electrode active material, second negative electrode active material, and third negative electrode active material were used.

**Comparative Example 6: Preparation of Negative Electrode**

1. Preparation of Slurry for Lower Negative Electrode Active Material Layer

The same as the second negative electrode active material of Example 1 was prepared as a negative electrode active material.

The negative electrode active material; carbon black as a conductive agent; a styrene-butadiene rubber (SBR) as a binder; and carboxymethylcellulose (CMC) as a thickener, were mixed in a weight ratio of 95.3:1.0:2.5:1.2, and water was added to prepare a slurry for a lower negative electrode active material layer.

2. Preparation of Slurry for Upper Negative Electrode Active Material Layer

The same as the third negative electrode active material prepared in Example 2 was prepared as a negative electrode active material.

The negative electrode active material; carbon black as a conductive agent; a styrene-butadiene rubber (SBR) as a binder; and carboxymethylcellulose (CMC) as a thickener, were mixed in a weight ratio of 95.3:1.0:2.5:1.2, and water was added to prepare a slurry for an upper negative electrode active material layer.

3. Formation of Lower Negative Electrode Active Material Layer and Upper Negative Electrode Active Material Layer

A negative electrode was prepared in the same manner as in Example 1 except that the above-prepared slurry for a lower negative electrode active material layer and slurry for an upper negative electrode active material layer were used.

**Comparative Example 7: Preparation of Negative Electrode**

1. Preparation of Slurry for Lower Negative Electrode Active Material Layer

A negative electrode active material was prepared in the same manner as the preparation method of the first negative electrode active material of Example 1 except that spherical natural graphite particles having an average particle diameter ($D_{50}$) of 18 $\mu$m were used as a natural graphite raw material and a pressure during the iso-pressing was 40 MPa.

The negative electrode active material had an average particle diameter ($D_{50}$) of 18 $\mu$m, a BET specific surface area of 1.9 $m^2$/g, a tap density of 1.07 g/cc, and a pore volume measured by mercury porosimetry of 0.050 mL/g.

The negative electrode active material; carbon black as a conductive agent; a styrene-butadiene rubber (SBR) as a binder; and carboxymethylcellulose (CMC) as a thickener, were mixed in a weight ratio of 96.1:1.0:1.7:1.2, and water was added to prepare a slurry for a lower negative electrode active material layer.

2. Preparation of Slurry for Upper Negative Electrode Active Material Layer

The same as the third negative electrode active material prepared in Example 2 was prepared as a negative electrode active material.

The negative electrode active material; carbon black as a conductive agent; a styrene-butadiene rubber (SBR) as a binder; and carboxymethylcellulose (CMC) as a thickener, were mixed in a weight ratio of 95.3:1.0:2.5:1.2, and water was added to prepare a slurry for an upper negative electrode active material layer.

3. Formation of Lower Negative Electrode Active Material Layer and Upper Negative Electrode Active Material Layer

A negative electrode was prepared in the same manner as in Example 1 except that the above-prepared slurry for a lower negative electrode active material layer and slurry for an upper negative electrode active material layer were used.

**Experimental Examples**

**Experimental Example 1: Swelling Evaluation**

**<Preparation of Lithium Secondary Battery>**

$LiCoO_2$ as a positive electrode active material, Li-435 (manufactured by Denka Company Limited) as a conductive agent, KF9700 (manufactured by Kureha Corporation) as a binder, and BH-730H (manufactured by Zeon Corporation) as a thickener, were mixed in a weight ratio of 97.68:1.20:1.00:0.12 and N-methyl-2-pyrrolidone (NMP) was added to prepare a positive electrode slurry, and an aluminum foil was coated with the positive electrode slurry, vacuum dried at about 130°C for 8 hours, and roll-pressed to prepare a positive electrode. In this case, the positive electrode was prepared such that a loading was about 3.4 mAh/cm$^2$.

After a polyolefin separator was disposed between each of the negative electrodes prepared in Examples 1 to 3 and Comparative Examples 1 to 7 and the prepared positive electrode, an electrolyte solution was injected to prepare secondary batteries of the examples and the comparative examples. One, in which 0.5 wt% of vinylene carbonate (VC) was added to a non-aqueous electrolyte solution solvent, in which ethylene carbonate (EC) and ethyl methyl carbonate (EMC) were mixed in a volume ratio of 2:8, and LiPF$_6$ was dissolved at a concentration of 1 M, was used as the electrolyte solution.

**<Swelling Evaluation>**

The above-prepared lithium secondary batteries of Examples 1 to 3 and Comparative Examples 1 to 7 were charged and discharged in a charge range from an SOC of 0 to an SOC of 95 at 0.1 C in a first cycle, at 0.2 C in a second cycle, and at 0.5 C from a third cycle to a 50th cycle. Thereafter, a swelling ratio was measured and calculated by the following equation. The results thereof are presented in Table 1 below.

$$\text{Swelling ratio (\%)} = \{(t_2-t_1)/t_1\} \times 100$$

($t_1$ is a thickness of the negative electrode for a secondary battery before the first charge/discharge cycle, and $t_2$ is a thickness of the negative electrode for a secondary battery after the 50th charge/discharge cycle)

**Experimental Example 2: Initial Discharge Capacity Evaluation**

<Coin-type Half-cell Secondary Battery Preparation>

A lithium metal counter electrode was used as a positive electrode.

After a polyolefin separator was disposed between each of the negative electrodes prepared in Examples 1 to 3 and Comparative Examples 1 to 7 and the prepared positive electrode, an electrolyte solution was injected to prepare coin-type half-cell secondary batteries of the examples and the comparative examples. One, in which 0.5 wt% of vinylene carbonate (VC) was added to a non-aqueous electrolyte solution solvent, in which ethylene carbonate (EC) and ethyl methyl carbonate (EMC) were mixed in a volume ratio of 2:8, and LiPF$_6$ was dissolved at a concentration of 1 M, was used as the electrolyte solution.

<Initial Discharge Capacity Measurement>

Initial discharge capacity was measured by charging and discharging the coin-type half-cell secondary battery under the following charging and discharging conditions, and the results thereof are presented in Table 1 below.

Charging conditions: CCCV (constant current constant voltage) mode, 0.1 C charge, cut-off at 0.005 C and 5 mV
Discharging conditions: CC mode, 0.1 C discharge, cut-off at 1.5 V

[Table 1]

| | Experimental Example 1 | Experimental Example 2 |
|---|---|---|
| | Swelling ratio (%) | Initial discharge capacity (mAh/g) |
| Example 1 | 21 | 354 |
| Example 2 | 22 | 355 |
| Example 3 | 22 | 356 |
| Comparative Example 1 | 30 | 356 |
| Comparative Example 2 | 31 | 356 |
| Comparative Example 3 | 27 | 356 |
| Comparative Example 4 | 28 | 356 |
| Comparative Example 5 | 26 | 353 |
| Comparative Example 6 | 24 | 349 |

(continued)

| | Experimental Example 1 | Experimental Example 2 |
|---|---|---|
| | Swelling ratio (%) | Initial discharge capacity (mAh/g) |
| Comparative Example 7 | 25 | 357 |

Referring to Table 1, it may be confirmed that the negative electrodes and secondary batteries according to the examples of the present invention had an improved effect of reducing cycle expansion while having excellent energy density.

[Description of the Symbols]

10: Negative Electrode
100: Negative Electrode current collector
210: Lower Negative Electrode Active Material Layer
220: Upper Negative Electrode Active Material Layer

**Claims**

1. A negative electrode comprising:

   a negative electrode current collector;
   a lower negative electrode active material layer disposed on the negative electrode current collector; and
   an upper negative electrode active material layer disposed on the lower negative electrode active material layer,
   wherein the lower negative electrode active material layer comprises a first negative electrode active material including natural graphite particles and a second negative electrode active material including artificial graphite particles in a form of a primary particle, wherein the artificial graphite particles in a form of a primary particle are particles in the form of single particles, and
   the upper negative electrode active material layer comprises a third negative electrode active material including artificial graphite particles in a form of a secondary particle in which two or more primary particles are assembled,
   wherein a pore volume of the first negative electrode active material, which is measured by mercury porosimetry, is 0.06 mL/g or less, and
   wherein a ratio of the average particle diameter ($D_{50}$) of the first negative electrode active material to the average particle diameter ($D_{50}$) of the second negative electrode active material is in a range of 1 to 8.

2. The negative electrode of claim 1, wherein the pore volume of the first negative electrode active material, which is measured by the mercury porosimetry, is in a range of 0.001 mL/g to 0.06 mL/g.

3. The negative electrode of claim 1, wherein the first negative electrode active material has an average particle diameter ($D_{50}$) of 8 $\mu$m to 25 $\mu$m as determined by a laser diffraction method.

4. The negative electrode of claim 1, wherein the first negative electrode active material has a Brunauer-Emmett-Teller (BET) specific surface area of 0.6 $m^2$/g to 2.5 $m^2$/g.

5. The negative electrode of claim 1, wherein the second negative electrode active material has an average particle diameter ($D_{50}$) of 4 $\mu$m to 13 $\mu$m as determined by a laser diffraction method.

6. The negative electrode of claim 1, wherein the second negative electrode active material has a BET specific surface area of 0.1 $m^2$/g to 3.0 $m^2$/g.

7. The negative electrode of claim 1, wherein the third negative electrode active material has an average particle diameter ($D_{50}$) of 15 $\mu$m to 25 $\mu$m as determined by a laser diffraction method.

8. The negative electrode of claim 1, wherein the third negative electrode active material has a BET specific surface area

of 0.1 m$^2$/g to 3.0 m$^2$/g.

9. The negative electrode of claim 1, wherein a weight ratio of the first negative electrode active material to the second negative electrode active material is in a range of 50:50 to 90:10.

10. The negative electrode of claim 1, wherein a total weight of the first negative electrode active material and the second negative electrode active material is in a range of 80 wt% to 99 wt% based on a weight of the lower negative electrode active material layer.

11. The negative electrode of claim 1, wherein a weight of the third negative electrode active material is in a range of 80 wt% to 99 wt% based on a weight of the upper negative electrode active material layer.

12. The negative electrode of claim 1, wherein a ratio of a thickness of the lower negative electrode active material layer to a thickness of the upper negative electrode active material layer is in a range of 1:0.5 to 1:2.

13. A secondary battery comprising:

the negative electrode of claim 1;
a positive electrode facing the negative electrode;
a separator disposed between the negative electrode and the positive electrode; and
an electrolyte.

**Patentansprüche**

1. Negativelektrode, umfassend:

einen Negativelektrodenstromkollektor;
eine untere Negativelektrodenaktivmaterialschicht, die auf dem Negativelektrodenstromkollektor angeordnet ist; und
eine obere Negativelektrodenaktivmaterialschicht, die auf der unteren Negativelektrodenaktivmaterialschicht angeordnet ist,
worin die untere Negativelektrodenaktivmaterialschicht ein erstes Negativelektrodenaktivmaterial, das natürliche Graphitpartikel enthält, und ein zweites Negativelektrodenaktivmaterial, das künstliche Graphitpartikel in Form eines Primärpartikels enthält, umfasst, worin die künstlichen Graphitpartikel in Form eines Primärpartikels Partikel in Form von Einzelpartikeln sind, und
die obere Negativelektrodenaktivmaterialschicht ein drittes Negativelektrodenaktivmaterial umfasst, das künstliche Graphitpartikel in Form eines Sekundärpartikels enthält, in welchem zwei oder mehr Primärpartikel zusammengefügt sind,
worin ein Porenvolumen des ersten Negativelektrodenaktivmaterials, das mittels Quecksilberporosimetrie gemessen wird, 0,06 mL/g oder weniger beträgt, und
worin ein Verhältnis des durchschnittlichen Partikeldurchmessers ($D_{50}$) des ersten Negativelektrodenaktivmaterials zum durchschnittlichen Partikeldurchmesser ($D_{50}$) des zweiten Negativelektrodenaktivmaterials in einem Bereich von 1 bis 8 liegt.

2. Negativelektrode gemäß Anspruch 1, worin das Porenvolumen des ersten Negativelektrodenaktivmaterials, das mittels Quecksilberporosimetrie gemessen wird, in einem Bereich von 0,001 mL/g bis 0,06 mL/g liegt.

3. Negativelektrode gemäß Anspruch 1, worin das erste Negativelektrodenaktivmaterial einen durchschnittlichen Partikeldurchmesser ($D_{50}$) von 8 $\mu$m bis 25 $\mu$m, bestimmt mittels Laserbeugungsverfahren, aufweist.

4. Negativelektrode gemäß Anspruch 1, worin das erste Negativelektrodenaktivmaterial eine spezifische Oberfläche nach Brunauer-Emmett-Teller (BET) von 0,6 m$^2$/g bis 2,5 m$^2$/g aufweist.

5. Negativelektrode gemäß Anspruch 1, worin das zweite Negativelektrodenaktivmaterial einen durchschnittlichen Partikeldurchmesser ($D_{50}$) von 4 $\mu$m bis 13 $\mu$m, bestimmt mittels Laserbeugungsverfahren, aufweist.

6. Negativelektrode gemäß Anspruch 1, worin das zweite Negativelektrodenaktivmaterial eine BET-spezifische Ober-

fläche von 0,1 m$^2$/g bis 3,0 m$^2$/g aufweist.

7. Negativelektrode gemäß Anspruch 1, worin das dritte Negativelektrodenaktivmaterial einen durchschnittlichen Partikeldurchmesser (D$_{50}$) von 15 μm bis 25 μm, bestimmt mittels Laserbeugungsverfahren, aufweist.

8. Negativelektrode gemäß Anspruch 1, worin das dritte Negativelektrodenaktivmaterial eine BET-spezifische Oberfläche von 0,1 m$^2$/g bis 3,0 m$^2$/g aufweist.

9. Negativelektrode gemäß Anspruch 1, worin ein Gewichtsverhältnis des ersten Negativelektrodenaktivmaterials zum zweiten Negativelektrodenaktivmaterial in einem Bereich von 50:50 bis 90:10 liegt.

10. Negativelektrode gemäß Anspruch 1, worin ein Gesamtgewicht des ersten Negativelektrodenaktivmaterials und des zweiten Negativelektrodenaktivmaterials in einem Bereich von 80 Gew.-% bis 99 Gew.-%, bezogen auf ein Gewicht der unteren Negativelektrodenaktivmaterialschicht, liegt.

11. Negativelektrode gemäß Anspruch 1, worin ein Gewicht des dritten Negativelektrodenaktivmaterials in einem Bereich von 80 Gew.-% bis 99 Gew.-%, bezogen auf ein Gewicht der oberen Negativelektrodenaktivmaterialschicht, liegt.

12. Negativelektrode gemäß Anspruch 1, worin ein Verhältnis einer Dicke der unteren Negativelektrodenaktivmaterialschicht zu einer Dicke der oberen Negativelektrodenaktivmaterialschicht in einem Bereich von 1:0,5 bis 1:2 liegt.

13. Sekundärbatterie, umfassend:

   die Negativelektrode gemäß Anspruch 1;
   eine Positivelektrode, die der Negativelektrode gegenüberliegt;
   einen Separator, der zwischen der Negativelektrode und der Positivelektrode angeordnet ist; und
   einen Elektrolyten.

**Revendications**

1. Électrode négative comprenant :

   un collecteur de courant d'électrode négative ;
   une couche inférieure de matériau actif d'électrode négative disposée sur le collecteur de courant d'électrode négative ; et
   une couche supérieure de matériau actif d'électrode négative disposée sur la couche inférieure de matériau actif d'électrode négative,
   dans laquelle la couche inférieure de matériau actif d'électrode négative comprend un premier matériau actif d'électrode négative incluant des particules de graphite naturel et un deuxième matériau actif d'électrode négative incluant des particules de graphite artificiel sous la forme d'une particule primaire, dans laquelle les particules de graphite artificiel sous la forme d'une particule primaire sont des particules sous la forme de particules individuelles, et
   la couche supérieure de matériau actif d'électrode négative comprend un troisième matériau actif d'électrode négative incluant des particules de graphite artificiel sous la forme d'une particule secondaire dans laquelle au moins deux particules primaires sont assemblées,
   dans laquelle un volume de pores du premier matériau actif d'électrode négative, qui est mesuré par porosimétrie au mercure, est de 0,06 mL/g ou moins, et
   dans laquelle un rapport du diamètre moyen de particule (D$_{50}$) du premier matériau actif d'électrode négative sur le diamètre moyen de particule (D$_{50}$) du deuxième matériau actif d'électrode négative est dans une plage de 1 à 8.

2. Électrode négative selon la revendication 1, dans laquelle le volume de pores du premier matériau actif d'électrode négative, qui est mesuré par porosimétrie au mercure, est dans une plage de 0,001 mL/g à 0,06 mL/g.

3. Électrode négative selon la revendication 1, dans laquelle le premier matériau actif d'électrode négative présente un diamètre moyen de particule (D$_{50}$) de 8 μm à 25 μm tel que déterminé par une méthode de diffraction laser.

**4.** Électrode négative selon la revendication 1, dans laquelle le premier matériau actif d'électrode négative présente une surface spécifique Brunauer-Emmett-Teller (BET) de 0,6 $m^2$/g à 2,5 $m^2$/g.

**5.** Électrode négative selon la revendication 1, dans laquelle le deuxième matériau actif d'électrode négative présente un diamètre moyen de particule ($D_{50}$) de 4 $\mu$m à 13 $\mu$m tel que déterminé par une méthode de diffraction laser.

**6.** Électrode négative selon la revendication 1, dans laquelle le deuxième matériau actif d'électrode négative présente une surface spécifique BET de 0,1 $m^2$/g à 3,0 $m^2$/g.

**7.** Électrode négative selon la revendication 1, dans laquelle le troisième matériau actif d'électrode négative présente un diamètre moyen de particule ($D_{50}$) de 15 $\mu$m à 25 $\mu$m tel que déterminé par une méthode de diffraction laser.

**8.** Électrode négative selon la revendication 1, dans laquelle le troisième matériau actif d'électrode négative présente une surface spécifique BET de 0,1 $m^2$/g à 3,0 $m^2$/g.

**9.** Électrode négative selon la revendication 1, dans laquelle un rapport en poids du premier matériau actif d'électrode négative sur le deuxième matériau actif d'électrode négative est dans une plage de 50:50 à 90:10.

**10.** Électrode négative selon la revendication 1, dans laquelle un poids total du premier matériau actif d'électrode négative et du deuxième matériau actif d'électrode négative est dans une plage de 80 % en poids à 99 % en poids sur la base d'un poids de la couche inférieure de matériau actif d'électrode négative.

**11.** Électrode négative selon la revendication 1, dans laquelle un poids du troisième matériau actif d'électrode négative est dans une plage de 80 % en poids à 99 % en poids sur la base d'un poids de la couche supérieure de matériau actif d'électrode négative.

**12.** Électrode négative selon la revendication 1, dans laquelle un rapport de l'épaisseur de la couche inférieure de matériau actif d'électrode négative sur l'épaisseur de la couche supérieure de matériau actif d'électrode négative est dans une plage de 1:0,5 à 1:2.

**13.** Batterie secondaire comprenant :

l'électrode négative selon la revendication 1 ;
une électrode positive faisant face à l'électrode négative ;
un séparateur disposé entre l'électrode négative et l'électrode positive ; et
un électrolyte.

[FIG. 1]

**10**

220
210
100

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210184261
- JP 4403327 B
- WO 2018062836 A2
- KR 1020200088237 A